# NEUE EUROPÄISCHE PATENTSCHRIFT

(11) **EP 1 554 493 B2**
(45) Veröffentlichungstag und Bekanntmachung des Hinweises auf die Entscheidung über den Einspruch: **15.02.2017**
(45) Hinweis auf die Patenterteilung: 28.11.2012
(21) Anmeldenummer: 03773556.0
(22) Anmeldetag: 21.10.2003
(51) Int. Cl.: F03D 80/00, F03D 1/06

(54) **WINDKRAFTANLAGE MIT STRUKTURIERTEN OBERFLÄCHEN ZUR STRÖMUNGSVERBESSERUNG**
WIND POWER UNIT WITH STRUCTURED SURFACES FOR IMPROVEMENT OF FLOW
EOLIENNE A SURFACES STRUCTUREES DESTINEES A AMELIORER LA CIRCULATION DE L'AIR

(30) Priorität: 22.10.2002 DE 10249297; 14.01.2003 DE 10301080
(43) Veröffentlichungstag der Anmeldung: 20.07.2005
(73) Patentinhaber: Siemens Aktiengesellschaft, 80333 München (DE)
(72) Erfinder: HERBST, Manfred, 90411 Nürnberg (DE)
(86) Internationale Anmeldenummer: PCT/DE2003/003505
(87) Internationale Veröffentlichungsnummer: WO 2004/038217

(56) Entgegenhaltungen:
- WO-A-02/064422
- DE-A- 10 000 780
- DE-U- 29 923 485
- US-A- 218 438
- US-A- 4 974 633
- US-A- 5 386 146
- US-A- 5 846 141

## Beschreibung

Die Erfindung betrifft eine Windkraftanlage mit einem Mast, einem Rotor mit mehreren Rotorblättern, einer Gondel und gegebenenfalls weiteren umströmten Komponenten.

Im Mix der Energieerzeugung nehmen Windturbinen mit unterschiedlichen Leistungen bereits einen festen Platz ein. Durch die Weiterentwicklungen der letzten Jahre sind diese Windkraftanlagen immer größer und effizienter geworden.

Die von dem Rotor der Windkraftanlage überstrichene Fläche kann als die Fläche angesehen werden, aus der dem Wind Energie entzogen werden kann. In der Praxis ist es nachteilig, dass innerhalb dieser Fläche die verschiedenen Komponenten der Windkraftanlage wie der Mast, die Gondel und der Spinner oder die Welle der Windkraftanlage eine Störung der Luftströmung darstellen. Dadurch werden Luftwirbel, Turbulenzen und Windschatten erzeugt, die zu einer Reduzierung der vom Rotor überstrichenen Fläche und somit zu einem geringeren Energieertrag führen.

Darüber hinaus ist es nachteilig, dass auch die in Windrichtung nachfolgenden Windkraftanlagen durch die erzeugten Turbulenzen negativ beeinflusst werden. Da auf diese Windenergieanlagen eine zumindest teilweise gestörte, turbulente Luftströmung einwirkt, ist ihr Wirkungsgrad verschlechtert.

Ein weiterer Nachteil ist darin zu sehen, dass die einzelnen Rotorblätter der Kraft bzw. dem Druck der Luftströmung ausgesetzt sind, was zu einer Biegebelastung führt. Beim Vorbeistreichen eines Rotorblatts an dem Mast der Windenergieanlage wird das Rotorblatt für einen kurzen Zeitraum entlastet. Auf diese Weise kommt es zu einer periodischen Belastungsänderung, die sich in unerwünschten Schwingungen äußert. Diese dynamischen Effekte pflanzen sich über die Rotorblattnabe, den Generator, Lager, Wellen, Antriebe, Getriebe bis zum Mast fort, so dass sämtliche Bauteile stärker dimensioniert werden müssen, um die erforderliche Dauerfestigkeit sicherzustellen. Diese Vorkehrungen führen zu erhöhten Kosten der Windenergieanlage.

Aus der WO 97/04280 A1 ist es bereits bekannt, die Grenzschicht von umströmten Körpern durch eine strukturierte Oberfläche zu beeinflussen, allerdings werden dazu elektrische oder magnetische Felder benötigt.

DE-U-29 923 485 und US-A-4 974 633 zeigen Oberflächenstrukturen bei Windturbinen-blättern.

Die Erfindung betrifft daher das Problem, eine Windkraftanlage zu schaffen, die die genannten Nachteile vermeidet und bei der das Strömungsverhalten verbessert ist.

Zur Lösung dieses Problems wird eine Windkraftanlage vorgeschlagen, wie im Anspruch 1 angegeben.

Anders als bei bekannten Windkraftanlagen, die eine glatte Oberfläche aufweisen, sind bei der erfindungsgemäßen Windkraftanlage Vertiefungen bzw. entsprechende Erhöhungen zur Strömungsverbesserung vorgesehen. Diese Vertiefungen beeinflussen die Luftströmung, insbesondere die Grenzschicht, d. h. den Bereich zwischen der Bauteiloberfläche und der ungestörten Strömung. Bei glatten Oberflächen, die im Stand der Technik verwendet werden, wird der Strömungskörper auf der Anströmseite laminar angeströmt, an dieser Stelle liegt eine ungestörte Strömung vor. Der Umschlagpunkt kennzeichnet den Übergang zwischen laminarer und turbulenter Strömung. Hinter dem Umschlagpunkt ist die Luftströmung verwirbelt, was zu einem sehr starken Anstieg des Strömungswiderstands führt. Bei der erfindungsgemäßen Windkraftanlage mit den Vertiefungen und Erhöhungen auf der Oberfläche ist der Umschlagpunkt in Strömungsrichtung verschoben, d. h. Verwirbelungen bilden sich erst später, so dass der Strömungswiderstand verringert ist. Durch den verringerten Strömungswiderstand neigt die gesamte Windkraftanlage weniger zu Schwingungen, so dass die einzelnen mechanischen Bauteile geringer belastet werden. Ein weiterer Vorteil liegt darin, dass die Interaktion zwischen dem Rotormast und dem vorbeistreichenden Rotorblatt verringert wird, wodurch die Biegebelastung des Rotorblatts ebenfalls vermindert wird.

Ein weiterer Vorteil der erfindungsgemäßen Windkraftanlage ist darin zu sehen, dass die Luftströmung im Nachlaufbereich hinter der Windkraftanlage weniger gestört ist, so dass nachfolgende Windkraftanlagen kaum beeinträchtigt werden. Es ist daher möglich, mehrere Windenergieanlagen in einem Windpark mit einem geringeren Abstand voneinander aufzustellen, so dass die Energiedichte der Windparkfläche erhöht werden kann.

Es ist günstig, dass die erfindungsgemäße Windkraftanlage weniger anfällig für Verschmutzungen und Vereisung ist. Dieser Effekt wird auf die erhöhte Luftgeschwindigkeit in den Vertiefungen zurückgeführt.

Die erfindungsgemäße Windkraftanlage weist darüber hinaus den Vorteil auf, dass Geräuschemissionen im Vergleich zu herkömmlichen Anlagen verringert sind. Der entstehende Lärmpegel sowie die periodischen Schwingungen, die von der Windkraftanlage an den Boden übertragen werden, sind unerwünscht, da sie von den Anwohnern als unangenehm empfunden werden. Diesem Problem kann mit der erfindungsgemäßen Windkraftanlage abgeholfen werden, da die geschilderten Beeinträchtigungen sehr stark verringert werden, was zu einer hohen Akzeptanz dieser Technologie führt.

Die Vertiefungen auf der Oberfläche der erfindungsgemäßen Windkraftanlage können unterschiedlich geformt sein. Es ist besonders günstig, wenn sie im Wesentlichen die Form einer Halbkugel aufweisen.

Ähnlich gestaltete Oberflächen werden bei Golfbällen benutzt, die dem Golfball durch aerodynamische Effekte bessere Flugeigenschaften verleihen. Die Verwendung von Halbkugeln als Vertiefungen bietet sich insbesondere an den Stellen an, die aus unterschiedlichen Richtungen angeströmt werden, z. B. bei den Rotormasten. Es ist jedoch auch möglich, anders ausgebildete Vertiefungen zu verwenden, beispielsweise mit der Form eines halbierten Tropfenprofils. Tropfenprofile sind besonders strömungsgünstig, d. h. sie erzeugen lediglich einen minimalen Widerstand. Tropfenprofile eignen sich insbesondere für die Rotorblätter, da die Anströmrichtung bei Rotorblättern im Wesentlichen konstant ist.

Es ist vorteilhaft, die Vertiefungen auf der bzw. den Oberflächen regelmäßig anzuordnen. Beispielsweise können die Vertiefungen reihenweise angeordnet werden, wobei benachbarte Reihen zueinander versetzt angeordnet sein können. Auf diese Weise wird eine gute Flächenausnutzung erzielt.

Die Vertiefungen sind bei einem Rotorblatt im Wesentlichen in dem Bereich zwischen dem Umschlagpunkt zwischen laminarer und turbulenter Strömung und der Endkante des Rotorblatts angeordnet. Bei dieser Ausgestaltung weist der laminar umströmte Nasenbereich des Rotorblatts keine Vertiefungen auf. Die Vertiefungen sind in dem Bereich angeordnet, in dem bei herkömmlichen Rotorblättern der Umschlag zwischen laminarer und turbulenter Strömung erfolgt. Die Vertiefungen bewirken, dass der Umschlagpunkt in Strömungsrichtung verschoben wird, so dass die laminare Laufstrecke der Strömung verlängert wird. Dieser Effekt hat zur Folge, dass der turbulente Bereich im Vergleich zu herkömmlichen Windkraftanlagen wesentlich schmaler ist.

Die Erfindung kann besonders leicht verwirklicht werden, wenn die Vertiefungen auf einem flächigen Trägermaterial ausgebildet sind, das auf oder an der Windkraftanlage befestigbar ist. Auf diese Weise können Windkraftanlagen auch nachträglich mit der Vertiefungen aufweisenden Oberflächenstruktur versehen werden. Die Handhabung ist besonders einfach, wenn das Trägermaterial eine Folie ist, insbesondere eine selbstklebende Folie.

Weitere Vorteile und Einzelheiten der Erfindung werden anhand von Ausführungsbeispielen unter Bezugnahme auf die Figuren näher erläutert. Die Figuren sind schematische Darstellungen und zeigen:
- Fig. 1: eine halbkugelförmige Vertiefung in der Oberfläche einer erfindungsgemäßen Windkraftanlage in einer geschnittenen Seitenansicht;
- Fig. 2-7: die in Figur 1 gezeigte Vertiefung und die aerodynamischen Effekte beim Vorbeistreichen von Luft in einzelnen Schritten;
- Fig. 8: die Entstehung von Strömungswirbeln an den Vertiefungen;
- Fig. 9: eine Draufsicht auf ein Feld mit regelmäßig angeordneten Vertiefungen sowie den dadurch erzeugten Strömungsverlauf;
- Fig. 10: einen angeströmten Rotormast einer herkömmlichen Windkraftanlage und das erzeugte Strömungsfeld in einer horizontal geschnittenen Ansicht;
- Fig. 11: einen Rotormast einer erfindungsgemäßen Windkraftanlage und das erzeugte Strömungsfeld in einer horizontal geschnittenen Ansicht, und
- Fig. 12: eine erfindungsgemäße Windkraftanlage, deren Oberfläche zumindest teilweise Vertiefungen zur Strömungsverbesserung aufweist.

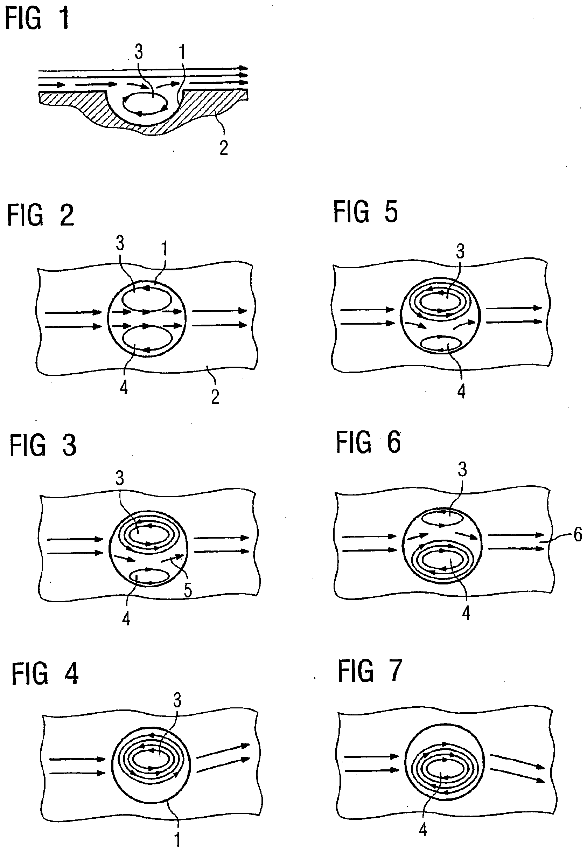

Fig. 1 zeigt eine halbkugelförmige Vertiefung 1 in der Oberfläche 2 einer Windkraftanlage in einer geschnittenen Seitenansicht. Wie in Fig. 1 zu erkennen ist, wird die Oberfläche 2 im Wesentlichen parallel zur Oberfläche angeströmt. Die in diesem Ausführungsbeispiel gezeigte halbkugelförmige Vertiefung 1 ist lediglich beispielhaft zu verstehen. Anstelle der Halbkugelform kann auch die Form eines halbierten Tropfenprofils oder eine andere Form gewählt werden, die zu einer Verbesserung der Strömung führt.

Beim Vorbeistreichen der Luft an der Vertiefung 1 bildet sich in der Vertiefung 1 ein Luftwirbel 3 aus, der das Vorbeistreichen der Luft unterstützt und das Luftvolumen beschleunigt. Die Stärke dieses Effekts ist von der Anströmgeschwindigkeit, dem Anströmwinkel, dem Luftdruck, der Lufttemperatur, der Form und Ausgestaltung der Vertiefung 1 abhängig. Die sich in jeder Vertiefung bildenden Wirbel 3 wirken für die vorbeistreichende Luft wie ein "Kugellager", die laminare Strömung an der Oberfläche 2 wird dadurch nicht oder nur wenig gestört.

Die Figuren 2 - 7 zeigen die in Fig. 1 gezeigte Vertiefung 1 und die aerodynamischen Effekte beim Vorbeistreichen von Luft in einzelnen Schritten.

Fig. 2 ist eine Draufsicht und stellt die Oberfläche 2 einer Komponente der Windkraftanlage dar, die mit einer Vertiefung 1 versehen ist. Von der halbkugelförmigen Vertiefung 1 ist in Fig. 2 die kreisförmige Kante zu erkennen. Die Vertiefung 1 wird von der vorbeistreichenden Luft im Wesentlichen laminar angeströmt, dadurch werden zunächst zwei symmetrische Luftwirbel 3, 4 erzeugt.

Fig. 3 zeigt die Vertiefung von Fig. 2 kurze Zeit später. Durch Unsymmetrien bei der Anströmung hat sich der dominierende Wirbel 3 in der Vertiefung 1 gebildet, wohingegen der andere Luftwirbel 4 schwächer geworden ist. In Fig. 3 ist auch zu erkennen, dass die Stromlinien 5 der vorbeistreichenden Luft zwischen den Luftwirbeln 3, 4 seitlich abgelenkt werden.

Wie in Fig. 4 gezeigt ist, hat sich der dominierende, einseitige Luftwirbel 3 zu einem "Tornado" entwickelt, d. h. es ist ein kleiner, lokaler Wirbel entstanden, in dem die Luft aufsteigt, so dass sie von der Oberfläche 2 weg bewegt wird. Somit hat sich aus der Vertiefung 1 ein Luftwirbel 3 gebildet, der die vorbeistreichende Luft in Strömungsrichtung weiter antreibt. In Fig. 4 ist auch zu erkennen, dass die vorbeistreichende Luft zur Seite abgelenkt wird.

Fig. 5 zeigt die Strömungsverhältnisse kurze Zeit später. Der Luftwirbel 3 bricht durch Strömungsunsymmetrien nach kurzer Zeit wieder zusammen, so dass die Stärke des dominierenden Wirbels reduziert wird. Gleichzeitig beginnt der andere Luftwirbel 4, sich auszudehnen. Anders als bei dem Zustand von Fig. 4 erfährt die vorbeistreichende Luft in dieser Situation keine Richtungsablenkung, d. h. sie wird nicht beeinflusst.

Fig. 6 zeigt die Strömungsverhältnisse etwas später. Der Luftwirbel 4 beginnt zu dominieren, da er wesentlich größer und stärker als der andere Luftwirbel 3 ist. Es ist auch erkennbar, dass die Stromlinien 6 der vorbeistreichenden Luft eine Ablenkung zur Seite erfahren. Die Luftwirbel 3, 4 weisen entgegengesetzte Drehrichtungen auf, daher werden die Stromlinien 6 der vorbeistreichenden Luft in die entgegengesetzte seitliche Richtung im Vergleich zu dem in Fig. 4 dargestellten Zustand abgelenkt, in dem der Luftwirbel 3 dominierte.

Fig. 7 zeigt die Strömungsverhältnisse kurze Zeit später. Der Luftwirbel 4, der gegenläufig zum Luftwirbel 3 ist, hat sich zu einem größeren Wirbel entwickelt, der aus der Vertiefung 1 heraus die vorbeiströmende Luft in Strömungsrichtung weiter antreibt.

Im weiteren Verlauf wird auch der Luftwirbel 4 durch Strömungsunsymmetrien wieder zusammenbrechen, so dass die dargestellte Abfolge sich fortlaufend wiederholt.

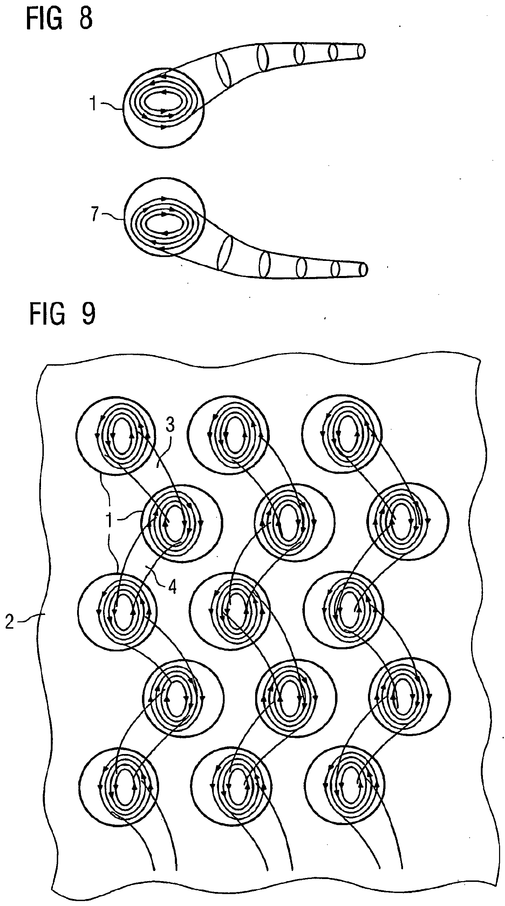

Fig. 8 zeigt die Entstehung von Strömungswirbeln an den Vertiefungen. Die Windkraftanlage umfasst üblicherweise eine Vielzahl von Vertiefungen 1, die auf der Oberfläche der Rotorblätter, des Mastes, der Gondel oder einer anderen umströmten Komponente ausgebildet sind. Ausgehend von jeder einzelnen Vertiefung 1 bilden sich kleine Strömungswirbel aus, die die vorbeistreichende Luft in Strömungsrichtung weiter antreiben. Nach einiger Zeit bricht der Wirbel zusammen und ein Wirbel mit entgegengesetzter Drehrichtung entsteht. Benachbarte Vertiefungen 1, 7 können dabei dieselbe oder die entgegengesetzte Drehrichtung aufweisen. Der Reibungswiderstand in der Grenzschicht zwischen der vorbeistreichenden Luft und der Oberfläche wird dabei reduziert, außerdem wird die Luftströmung an der Oberfläche unterstützt und beschleunigt. Da die Gesamtenergie eines geschlossenen Systems nicht ansteigen kann, wird gleichzeitig an anderen Stellen Energie verbraucht, beispielsweise durch Reibungseffekte, d.h. die Reibungsenergie herkömmlicher Systeme wird teilweise zur Erzeugung der Luftwirbel genutzt, die wiederum die Gesamtreibungsverluste reduzieren.

Fig. 9 zeigt ein Feld mit regelmäßig angeordneten Vertiefungen und das resultierende Strömungsfeld. Wie in Fig. 9 zu erkennen ist, sind die Vertiefungen in waagerechten Reihen angeordnet, wobei benachbarte Reihen seitlich so versetzt sind, dass jede Vertiefung 1 im Wesentlichen den gleichen Abstand zu allen benachbarten Vertiefungen aufweist. Die links- und rechtsdrehenden Luftwirbel wechseln sich im Laufe der Zeit ab und auf der umströmten Oberfläche 2 bildet sich ein Muster dieser wechselnden Wirbel, die in Abhängigkeit von der Anströmgeschwindigkeit und weiteren aerodynamischen Parametern im Wesentlichen von einer Vertiefung 1 bis zur nächsten Vertiefung 1 reichen. Diese Luftwirbel 3, 4 unterstützen und beschleunigen die Luftströmung über die gesamte Oberfläche 2.

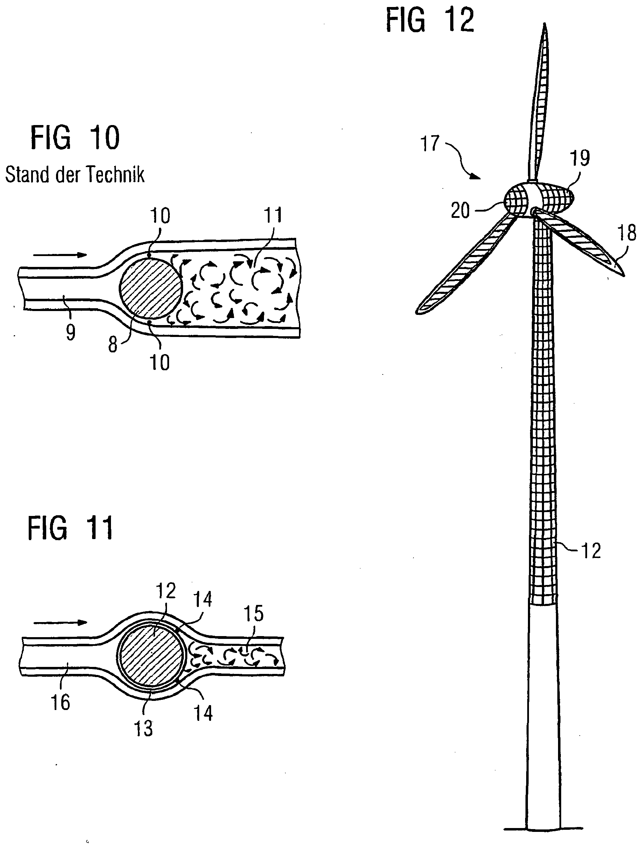

Fig. 10 zeigt schematisch einen angeströmten Rotormast einer herkömmlichen Windkraftanlage und das erzeugte Turbulenzfeld in einer horizontal geschnittenen Ansicht. Der Rotormast 8 weist einen kreisförmigen Querschnitt auf. Die anströmende Luftmasse 9 ist im Wesentlichen laminar, d. h. die einzelnen Stromfäden verlaufen parallel zueinander, die Luft ist turbulenzfrei. Die Umschlagpunkte 10 befinden sich in Strömungsrichtung betrachtet an der linken und rechten Seite des Rotormasts im Bereich des größten Durchmessers. Der Umschlagpunkt 10 kennzeichnet die Stelle, an der die laminare Strömung 9 in die turbulente Strömung 11 umschlägt. Wie in Fig. 10 zu erkennen ist, hat der Nachlaufbereich mit der turbulenten Strömung 11 eine leichte Kegelform, so dass sich der turbulente Bereich hinter der Windkraftanlage vergrößert. Nachfolgende Windkraftanlagen werden mit turbulenter Luft beaufschlagt, was zu einer Verringerung ihres Wirkungsgrads führt.

Fig. 11 ist eine ähnliche Darstellung wie Fig. 10 und zeigt einen Rotormast 12, der außenseitig mit einer Folie 13 versehen ist, wobei die Folie 13 Vertiefungen zur Verbesserung der Strömung aufweist. Anders als bei dem in Fig. 10 gezeigten Rotormast besitzt die anströmende laminare Luft 16 bei dem mit der Folie 13 versehenen Rotormast 12 eine wesentlich längere laminare Laufstrecke, so dass die Umschlagpunkte 14 in Strömungsrichtung versetzt sind. Wie in Fig. 11 zu erkennen ist, liegen die Umschlagpunkte 14 hinter dem größten Durchmesser des Rotormasts 12, so dass die Strömung bis dort sehr reibungsarm ist. Die turbulente Strömung 15 kann sich erst anschließend ausbilden. Anders als bei dem in Fig. 10 dargestellten Beispiel ist der Bereich der turbulenten Strömung 15 wesentlich kleiner, so dass nachfolgende Windkraftanlagen deutlich weniger beeinflusst werden. Es ist daher möglich, die einzelnen Windkraftanlagen eines Windparks mit geringerem Abstand aufzustellen, so dass sich eine bessere Flächennutzung und ein höherer Energieertrag pro Fläche ergibt.

Fig. 12 zeigt eine Windkraftanlage in einer schematischen Ansicht, deren Oberfläche zumindest teilweise Vertiefungen zur Strömungsverbesserung aufweist. Die insgesamt mit 17 bezeichnete Windkraftanlage besteht im Wesentlichen aus einem Mast 12, einem Rotor mit mehreren Rotorblättern 18, einer Gondel 19 zur Aufnahme des Generators sowie einem Spinner 20, der den Nabenbereich des Rotors abdeckt.

Diejenigen Bereich der Oberfläche der einzelnen Bestandteile der Windkraftanlage 17, die mit Vertiefungen versehen sind, sind in Fig. 12 schraffiert dargestellt. Der Rotormast 12 ist abgesehen von seinem unteren Teil vollständig mit Vertiefungen zur Strömungsverbesserung versehen. Ebenso sind die Gondel 19 und der Spinner 20 auf ihrer gesamten Oberfläche mit Vertiefungen versehen. Die Rotorblätter 18 weisen auf ihren Ober- und Unterseiten in Längsrichtung verlaufende, streifenförmige Bereiche auf, die mit den Vertiefungen versehen sind.

Anders als bei dem bekannten Haifischhauteffekt, mit dem sich eine Reibungsverminderung um etwa 10 % erzielen lässt, haben erste Voruntersuchungen ergeben, dass bei der Windkraftanlage eine Verbesserung um 30 % zu erwarten ist.

## Patentansprüche

1. Windkraftanlage mit
einem Mast, einem Rotor mit mehreren Rotorblättern, einer Gondel und gegebenenfalls weiteren umströmten Komponenten, so dass
die Oberfläche der Rotorblätter (18) und gegebenenfalls des Mastes (12) und/oder der Gondel (19) und/oder der weiteren Komponenten zumindest teilweise Vertiefungen (1) zur Strömungsverbesserung aufweist,
**dadurch gekennzeichnet, dass**
die Vertiefungen (1) bei einem Rotorblatt (18) im Wesentlichen in dem Bereich zwischen dem Umschlagpunkt zwischen laminarer und turbulenter Strömung und der Endkante des Rotorblatts (18) angeordnet sind,
die Form und die Ausgestaltung der Vertiefungen (1) derart ausgelegt ist, dass beim Vorbeistreichen der Luft an der Vertiefung (1) sich in der Vertiefung (1) ein Luftwirbel (3) ausbildet, der das Vorbeistreichen der Luft unterstützt und das Luftvolumen beschleunigt, und dass
die Vertiefungen (1) auf einem flächigen Trägermaterial ausgebildet sind, das auf oder an der windkraftanlage (17) befestigbar ist, wobei das Trägermaterial eine Folie (13) ist.

2. Windkraftanlage nach Anspruch 1, **dadurch gekennzeichnet, dass**
die Vertiefungen (1) im Wesentlichen die Form einer Halbkugel oder eines halbierten Tropfenprofils aufweisen.

3. Windkraftanlage nach Anspruch 1 oder 2, **dadurch gekennzeichnet, dass**
die Vertiefungen (1) regelmäßig angeordnet sind.

4. Windkraftanlage nach einem der vorangehenden Ansprüche, **dadurch gekennzeichnet, dass**
die Vertiefungen (1) reihenweise angeordnet sind.

5. Windkraftanlage nach Anspruch 4, **dadurch gekennzeichnet, dass**
die Reihen zueinander versetzt angeordnet sind.

## Claims

1. Wind power unit with
a mast, a rotor with several rotor blades, a nacelle and if applicable further components, around which there is a flow, such that
the surface of the rotor blades (18) and if applicable of the mast (12) and/or the nacelle (19) and/or the further components has at least in some areas recesses (1) to improve flow,
**characterised in that**
in the case of a rotor blade (18) the recesses (1) are arranged essentially in the region between the transition point between laminar and turbulent flow and the final edge of the rotor blade (18),
the form and configuration of the recesses (1) are designed such that as the air passes the recess (1), an eddy (3) forms in the recess (1), which assists the passage of the air and accelerates the volume of air, and that
the recesses (1) are formed on a flat support material, which can be fixed on or to the wind power unit (17), wherein the support material is a film (13).

2. Wind power unit according to claim 1,
**characterised in that** the recesses (1) essentially have the form of a hemisphere or the profile of a half-teardrop.

3. Wind power unit according to claim 1 or 2,
**characterised in that** the recesses (1) are in a regular arrangement.

4. Wind power unit according to one of the preceding claims,
**characterised in that** the recesses (1) are arranged in rows.

5. Wind power unit according to claim 4,
**characterised in that** the rows are arranged offset in respect of each other.

## Revendications

1. Éolienne comprenant un mât, un rotor muni de plusieurs pales de rotor, une nacelle et, le cas échéant, d'autres composants contournés par un courant, de sorte que la surface des pales de rotor (18) et le cas échéant du mât (12) et/ou de la nacelle (19) et/ou des autres composants présente au moins en partie des évidements (1) pour l'amélioration du courant, **caractérisée en ce que** les évidements (1) dans une pale de rotor (18) sont essentiellement disposés dans la partie située entre le point de transition entre le courant laminaire et le courant turbulent et le bord terminal de la pale de rotor (18), et **en ce que** la forme et la conception des évidements (1) sont conçues de manière à ce que, lorsque l'air passe devant l'évidement (1) un tourbillon d'air (3) se forme dans l'évidement (1), qui soutient le passage de l'air et accélère le volume d'air, et **en ce que** les évidements (1) sont réalisés sur un matériau porteur plat qui peut être fixé sur ou contre l'éolienne (17), le matériau porteur étant une feuille (13).

2. Éolienne selon la revendication 1, **caractérisée en ce que** les évidements (1) présentent essentiellement la forme d'une demi-sphère ou d'un profil de goutte partagé en deux.

3. Éolienne selon la revendication 1 ou 2, **caractérisée en ce que** les évidements (1) sont disposés de manière régulière.

4. Éolienne selon l'une quelconque des revendications précédentes, **caractérisée en ce que** les évidements (1) sont disposés en rangées.

5. Éolienne selon la revendication 4, **caractérisée en ce que** les rangées sont disposées en étant décalées les unes par rapport aux autres.
